# EUROPEAN PATENT SPECIFICATION

(11) **EP 1 762 437 B1**
(45) Date of publication and mention of the grant of the patent: **15.12.2010**
(21) Application number: 06014281.7
(22) Date of filing: 10.07.2006
(51) Int. Cl.: B60R 19/18

(54) **Automotive front body structure**
Vorderteilanordnung eines Fahrzeugs
Structure avant de véhicule automobile

(30) Priority: 08.09.2005 JP 2005261138
(43) Date of publication of application: 14.03.2007
(73) Proprietor: Honda Motor Co., Ltd., Tokyo 107-8556 (JP)
(72) Inventor: Kikuchi, Takashi, Wako-shi Saitama, 351-0193 (JP); Ohkura, Kenji, Wako-shi Saitama, 351-0193 (JP); Iwatsuki, Shuichiro, Wako-shi Saitama, 351-0193 (JP)
(74) Representative: Trossin, Hans-Jürgen

(56) References cited:
- GB-A- 2 344 085
- JP-A- 4 353 046
- JP-A- 11 314 552
- US-A- 5 226 695
- US-B1- 6 604 884

## Description

### TECHNICAL FIELD

The present invention relates to an automotive front body structure with the features of the preamble part of claim 1, and in particular to a technology for preventing damages to an exterior garnish member or the like at the time of a mild crash situation while normally securing the exterior garnish member to a front bumper with an appropriate securing force.

### BACKGROUND OF THE INVENTION

It is common in automobiles to place a front garnish centrally above a front bumper (see Japanese patent laid open publications No. 10-230798 and No. 11-263246, for instance). A front garnish may include a grill for introducing air into an engine room when the vehicle is traveling, and is typically contoured so as to smoothly continue to a bonnet and headlamps for aesthetic considerations. A front garnish may be provided with a hollow structure that includes an outer panel (outer lens) made of transparent material and an inner panel having a metal plated front surface for an aesthetic effect. Such a hollow front garnish can create a highly luxurious appearance by providing a continuity with right and left headlamps each fitted with a lens made of polycarbonate or glass and showing an emblem mounted on the front face of the inner panel through the outer lens.

There is a growing trend in automotive body design to minimize a step and/or gap between a body panel and an exterior garnish member to aesthetically enhance an outer appearance and reduce air resistance. A hollow front garnish of the kind mentioned above typically has such a large weight that the lower end of the front garnish should be secured (fastened) to the upper end of the front bumper to minimize the step and gap between the front garnish and front bumper. A front garnish may be secured to a front bumper by using threaded bolts (as disclosed in Japanese patent laid open publication No. 10-230798) and by using plastic clips (as disclosed in Japanese patent No. 2725410).

An automotive front body structure with the features of the preamble part of claim 1 is known from US 5,226,695 A.

Such previously proposed methods for securing a front garnish to a front bumper have the following problems. When an automobile lightly hits another automobile or a fixed structure, an impact load is applied to the front bumper that is located in a lower front part of the automobile, and the front bumper may recede relative to the front garnish. In such a case, if the front garnish is secured to the front bumper by using threaded bolts, the parts of the front garnish and front bumper that are secured to each other may be damaged, and a significant component cost will be required for repair. If the front garnish is secured to the front bumper by using plastic clips, because the front garnish and front bumper are not secured to each other with an adequate fastening force, rattling and other noises may be caused during operation particularly when the plastic clips have been degraded owing to aging. In either case, threading of bolts or fastening of clips have to be carried out behind the front garnish, and this increases the effort required in the assembly work and reduces the work efficiency.

### BRIEF SUM1VIARY OF THE INVENTION

In view of such problems of the prior art, a primary object of the present invention is to provide an automotive front body structure that can prevent damages to an exterior garnish member or the like at the time of a mild crash situation while normally securing the exterior garnish member to a front bumper with an appropriate securing force.

According to the present invention, such an object can be accomplished by providing an automotive front body structure with the features of claim 1.

Thus, by appropriately selecting the clamping force provided to the clamping portion, it is possible to secure the exterior garnish member to the front bumper without causing rattling and prevent damages to the exterior garnish member and/or front bumper at the time of a mild crash by allowing the bracket to be dislodged from the exterior garnish member. The clamping portion is provided with a first clamping piece and a second clamping piece interposing the rib therebetween, and a resilient member urging the two clamping piece toward the rib.

The rib is provided with a notch having an open rear end, and the first clamping piece is provided with a first through hole at a position corresponding to the notch while the second clamping piece is provided with a second through hole having a smaller diameter than the first through hole at a position opposing the first through hole; the clamping portion further comprising a threaded bolt passed through the first through hole, notch and second through hole and a nut threaded onto the threaded bolt to interpose the rib between the first and second clamping pieces.

Thereby, the clamping force can be applied in a both accurate and reliable manner. In particular, as according to the invention the threaded bolt comprises a stepped bolt including a large diameter stem portion passed through the first through hole and notch, a head formed at one end of the large diameter stem portion and a small diameter threaded portion formed on the other end of the large diameter stem portion and passed through the second through hole, and a coil spring is fitted on the stepped bolt between the first clamping piece and head to resiliently urge the first clamping piece away from the head, by appropriately selecting the length of the large diameter stem portion of the stepped bolt and the wire diameter of the coil spring, the resilient clamping force provided to the clamping portion can be determined at will and at high precision.

If a rearwardly directed flange of an upper part of the front bumper is simply placed on an upper surface of the base portion of the lower bracket, the assembly work of the front bumper can be simplified because the front bumper can be installed from the front by introducing an upper part of the front bumper into a gap defined between a lower part of the exterior garnish member and an upper surface of the base portion of the lower bracket without requiring the assembly worker to access a rear area of the front bumper.

### BRIEF DESCRIPTION OF THE DRAWINGS

Now the present invention is described in the following with reference to the appended drawings, in which:
Figure 1 is a perspective view of an automobile embodying the present invention;
Figure 2 is an exploded perspective view of a part indicated by II in Figure 1;
Figure 3 is a vertical sectional view of a mounting structure of a front garnish taken along a central line of the vehicle body;
Figure 4 is an exploded perspective view of the structure for connecting the front garnish to a lower bracket;
Figure 5 is a perspective view showing the mode of mounting the front garnish onto a side bracket;
Figure 6 is a vertical sectional view showing the mode of mounting the front garnish onto the side bracket;
Figure 7 is a view similar to Figure 3 showing the mode of operation of the illustrated embodiment; and
Figure 8 is a view similar to Figure 6 showing the mode of operation of the illustrated embodiment.

### DETAILED DESCRIPTION OF THE PREFERRED EMBODIMENTS

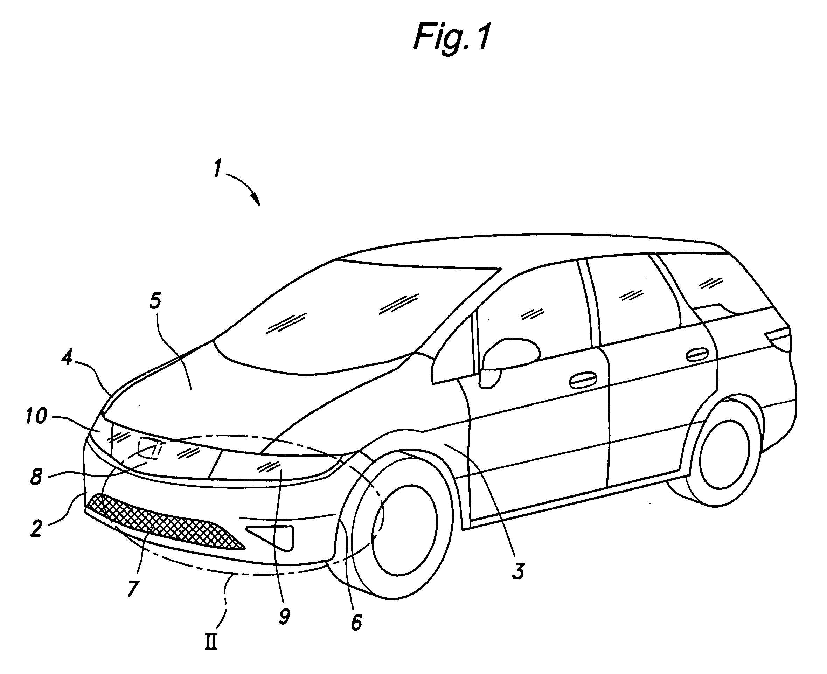

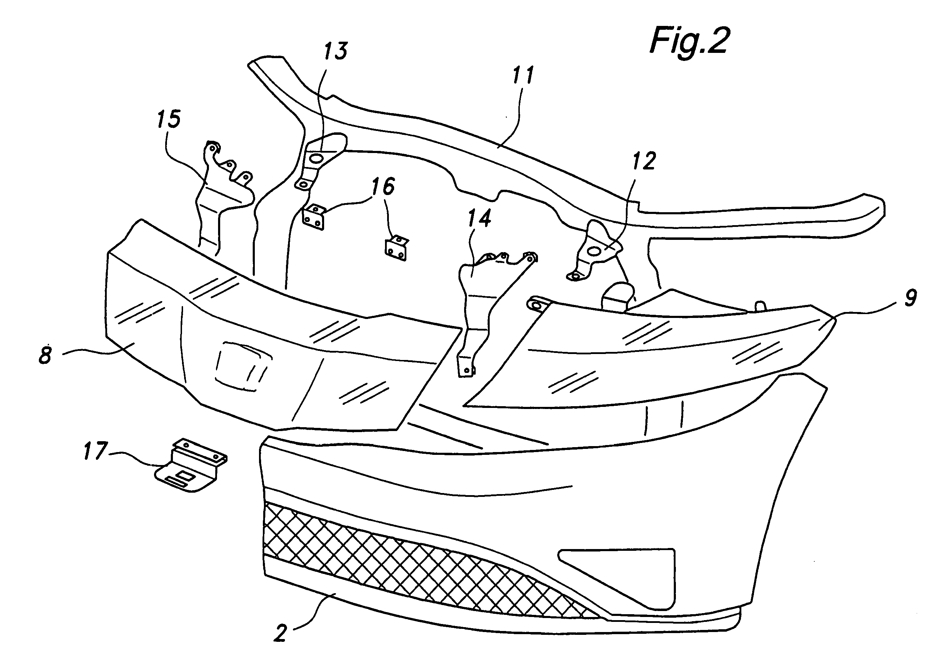

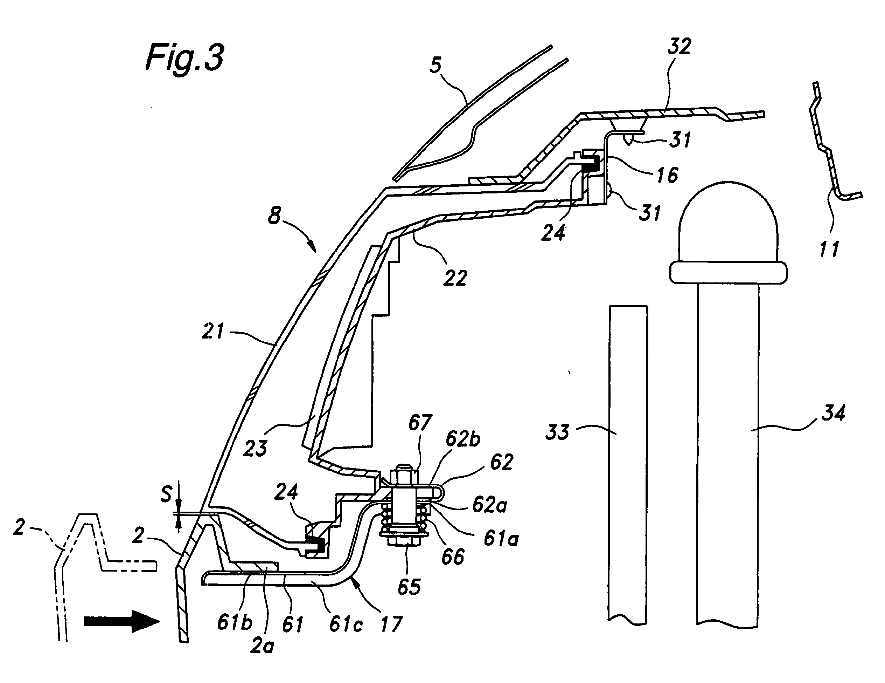

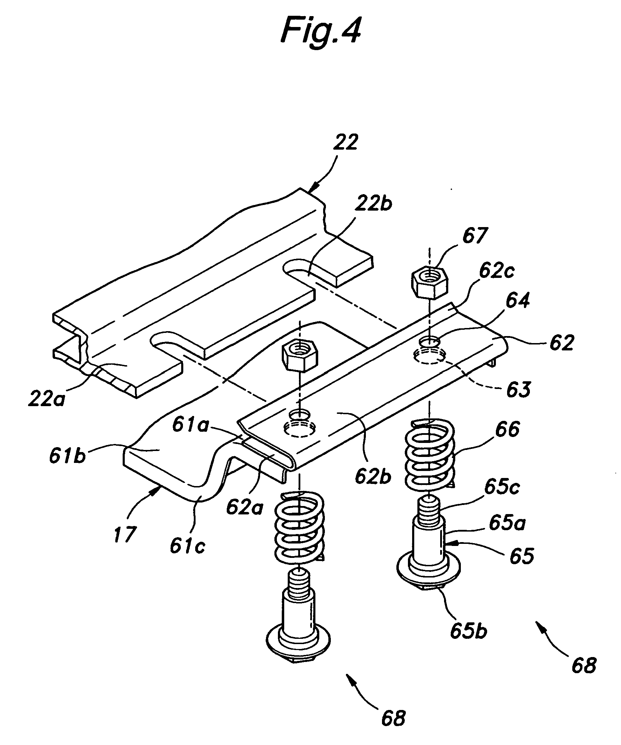

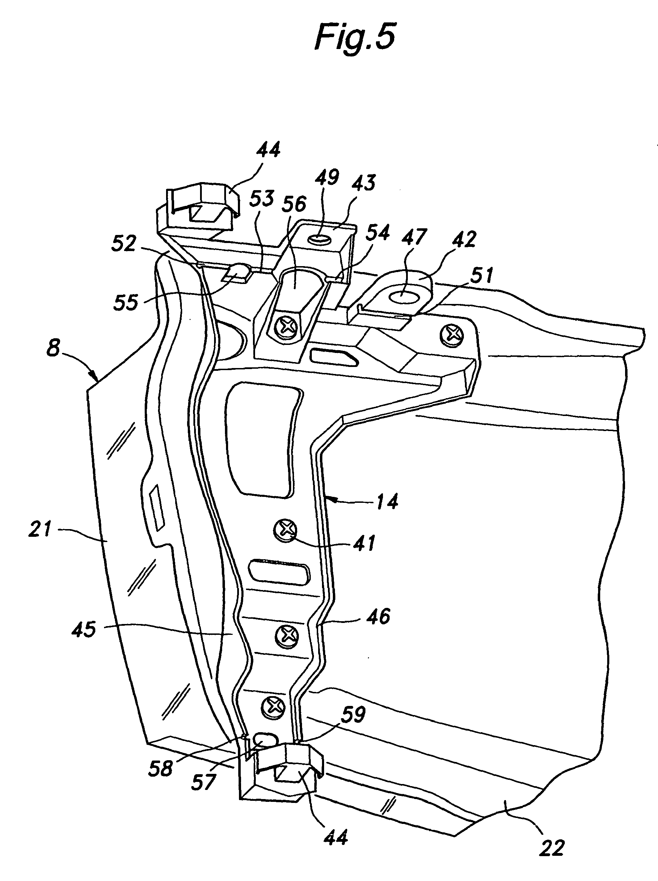

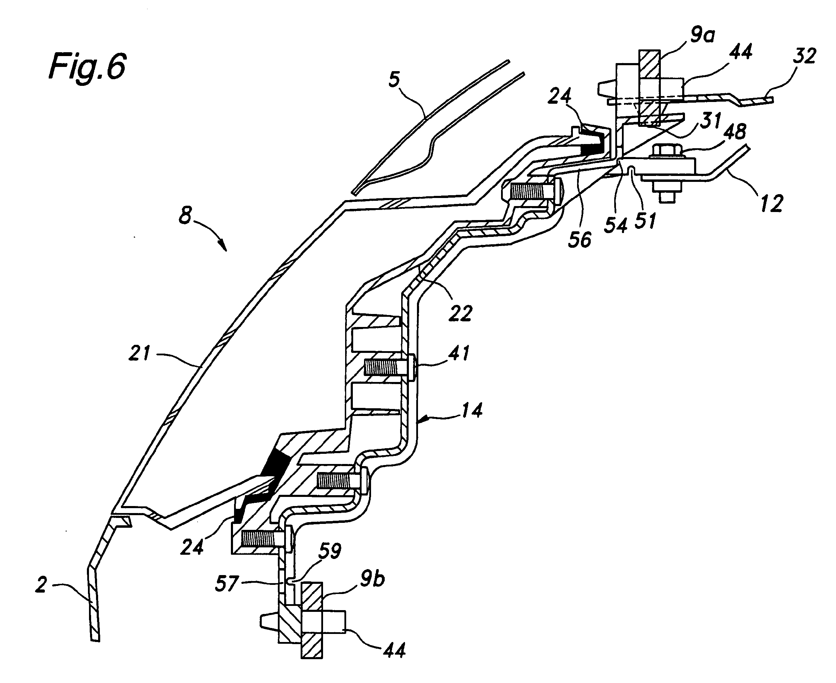

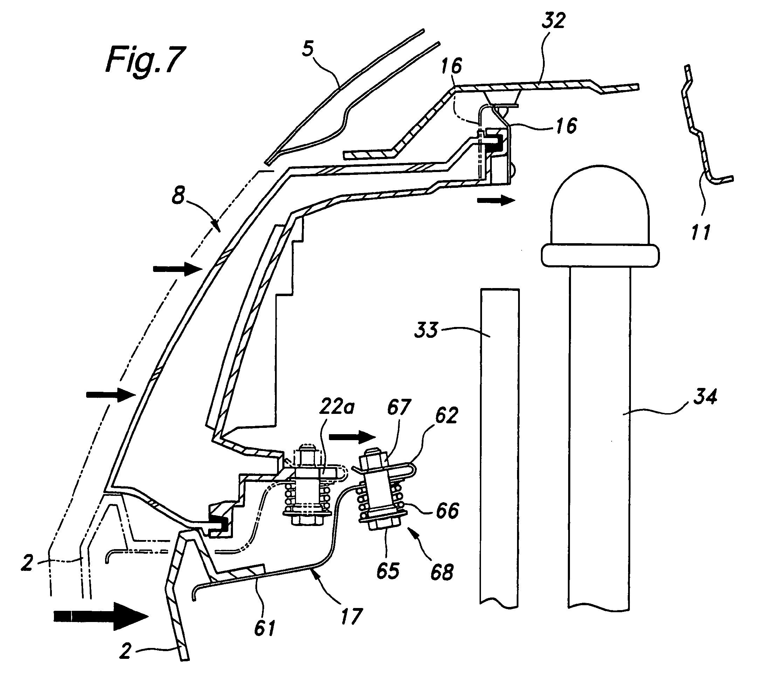

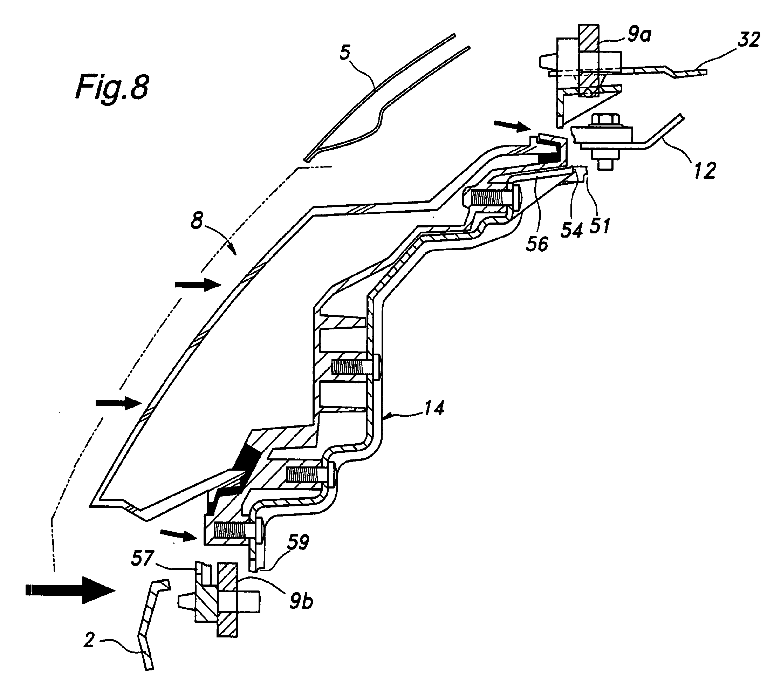

Figure 1 is a perspective view of an automobile embodying the present invention, Figure 2 is an exploded perspective view of a part indicated by II in Figure 1, Figure 3 is a vertical sectional view of a mounting structure of a front garnish taken along a central line of the vehicle body, Fig 4 is an exploded perspective view of the structure for connecting the front garnish to a lower bracket, Figure 5 is a perspective view showing the mode of mounting the front garnish onto a side bracket, Figure 6 is a vertical sectional view showing the mode of mounting the front garnish onto the side bracket, and Figures 7 and 8 are views showing the mode of operation of the illustrated embodiment.

### «Structure of the Embodiment»

### <Overall Structure>

Referring to Figure 1, the illustrated embodiment consists of a four door sedan (referred to as an automobile hereinafter) embodying the present invention. The body 1 of the illustrated embodiment consists of a monocoque body formed by welding steel panels together, and is provided with a front part defined by a front bumper 2, a pair of fender panels 3 and 4 located on either side of the front part and a bonnet 5. The front bumper (bumper face) 2 has a pair of lateral ends each of which is curved and defines a part of a wheel arch 6 and a front surface including a grill 7 for introducing air into the engine room when the vehicle is traveling. A front garnish 8 is disposed between an upper end of the front bumper 2 and bonnet 5, and a headlamp unit 9, 10 is disposed between each fender panel 3, 4 and the corresponding part of the upper end of the front bumper 2.

Referring to Figure 2, a front part of the body 1 includes a front bulkhead 11 consisting of a frame structure, and the front bumper 2 and headlamp units 9 and 10 are mounted on the front bulkhead 11. A pair of radiator upper mount brackets 12 and 13 are attached to a front face of the front bulkhead 11 on either lateral side thereof, and the front garnish 8 is secured to these radiator upper mount brackets 12 and 13 and head lamp units 9 and 10 via a pair of side brackets 14 and 15 secured to a rear face of the front garnish on either side thereof. The front garnish 8 is further provided with a pair of upper brackets 16 in a central upper part thereof in a laterally spaced relationship for supporting a front upper cover (not shown in Figure 2) and a lower bracket (bracket) 17 in a lower middle part thereof for securing the front garnish 8 to an upper part of the front bumper 2.

### <Front Garnish>

As shown in Figure 3, the front garnish 8 consists of a hollow structure including an outer lens 21 made of transparent polycarbonate resin and an inner panel 22 made of polypropylene resin and having a front surface that is metal plated by vapor deposition. As shown in Figure 1, the outer surface of the outer lens 21 continuously extends to those of the bonnet 5 and right and left headlamp units 9 and 10. The front surface of the inner panel 22 is centrally fitted with an emblem 23 so that the emblem may be seen from outside through the outer lens 21.

The outer lens 21 and inner panel 22 are joined to each other by mutual fitting, and the fitted parts are sealed by using seal members (indicated by the dark areas in Figure 3) 24 made of butyl rubber. As shown in Figure 4, a rib 22a extends horizontally rearward from a lower part of the rear face of the inner panel 22, and is provided with a pair of notches 22b each having an open rear end in a laterally spaced relationship.

### <Upper Bracket>

Each upper bracket 16 is made of stamp formed steel plate having a substantially L-shaped cross section, and has a lower end secured to an upper part of the rear face of the inner panel 22 by using tapping screws 31. To the upper surface of each upper bracket 16 is secured the front upper cover 32 also by using tapping screws 31.

### <Lower Bracket>

As shown in Figures 3 and 4, the lower bracket 17 is made of stamp formed steel plate, and comprises a bracket main body 61 having a substantially Z-shaped cross section and a clamping portion 62 also made of stamp formed steel plate and having a substantially U-shaped cross section. The bracket main body 61 and clamping portion 62 are joined to each other by welding.

The clamping portion 62 comprises a first clamping piece 62 secured to an upper wall portion 61a of the bracket main body 61 and a second clamping piece 62b that clamps the rib 22a of the inner panel 22 in cooperation with the first clamping piece 62a, and the front edge of the second clamping piece 62b is provided with a bent portion 62c to facilitate the introduction of the rib 22a of the front garnish 8 into the gap between the first and second clamping pieces 62a and 62b.

The upper wall portion 61a of the bracket main body 61 and first clamping piece 62a of the clamping portion 62 are formed with a first through hole 63 having a relatively large diameter at a position corresponding to each of the notches 22b of the rib 22. The second clamping piece 62b of the clamping portion 62 is formed with a second through hole 64 having a relatively small diameter 64 at a position opposing each of the first through holes 63.

### <Clamping Force Generating Means>

As shown in Figures 3 and 4, the clamping portion 62 of the lower bracket 17 is provided with a pair of clamping force generating mechanisms 68 in a laterally spaced relationship, and each clamping force generating mechanisms 68 comprises a stepped bolt 65, a coil spring 66 and a nut 67. Thereby, a relatively large resilient claming force is produced for clamping the rib 22a of the front garnish 8 with the clamping portion 62.

Each stepped bolt 65 comprises a large diameter stem portion 65a passed through the first through hole 63, a head 65b formed at one end of the large diameter stem portion 65a and a small diameter threaded portion 65c formed on the other end of the large diameter stem portion 65a and passed through the second through hole 64. The coil spring 66 is fitted on the large diameter stem portion 65a so as to be interposed between the first clamping piece 62a of the clamping portion 62 and head 65b to provide a resilient force that urges the upper wall portion 61a of the bracket main body 61 (or the first clamping piece 62a) away from the head 65b of the stepped bolt 65 (or upward) in the assembled state (Figure 3). The nut 67 is threaded on the small diameter threaded portion 65c of the stepped bolt 65 to fasten the stepped bolt 65 onto the second clamping piece 62b.

Referring to Figure 3, when assembling the front bumper 2, the front bumper 2 is introduced into a gap between the front garnish 8 and lower bracket 17 from front, and the upper end of the front bumper 2 opposes the lower end of the front garnish 8 at a certain gap S by an engagement portion 2a of the front bumper 2 resting on by a lower wall portion 61b of the lower bracket 17. Thereby, the assembly work is facilitated and the assembly worker is not required to access the area in the rear part of the front bumper 2. However, if desired, plastic clips or other fastening members may be used to join the engagement portion 2a of the front bumper 2 to the lower bracket 17. Between the front garnish 8 and front bulkhead are provided a condenser 33 and a radiator 34.

### <Side Bracket>

As shown in Figures 5 and 6, the left side bracket 14 consists of a vertically elongated injection molded plastic member (consisting of polypropylene, for instance), and is secured to the rear face of the inner panel 22 by five screws 41. A radiator upper mount engagement portion 42 having a relatively large thickness extends rearward from an inboard side of the upper end of the side bracket 14, and a cover engagement portion 43 having a relatively small thickness extends rearward from an upper middle part of the side bracket 14. From the upper and lower parts of the outboard side of the side bracket 14 extend a pair of clips 44 that are made of plastic material. The side bracket 15 is further provided with rearwardly directed flanges 45 and 46 on either side thereof. The right side bracket 15 is symmetric to the left side bracket 14 regarding the shape and mounting arrangement thereof.

The radiator upper mount engagement portion 42 is provided with a bolt hole 47 in a free end portion thereof for attachment to the radiator upper mount bracket 12 by means of a threaded bolt 48. A free end portion of the cover engagement portion 43 is also provided with a bolt hole 49 for attachment to the front upper cover 32 by means of a tapping screw 31. The upper and lower clips 44 are fitted into corresponding holes formed in upper and lower stays 9a and 9b of the corresponding headlamp unit 9.

The side bracket 14 of the illustrated embodiment is provided with a notch 51 at a base end of the radiator upper mount engagement portion 42. The parts of the side bracket 14 immediately under the upper clip 44 and cover engagement portion 43 are provided with three notches 52-54 and a pair of through holes 55 and 56. A through hole 57 is formed immediately above the lower clip 44, and notches 58 and 59 are provided in the side flanges 45 and 46, respectively.

### <Mode of Operation of the Embodiment>

When assembling an automobile, the front bumper 2 is assembled after the front garnish 8 and headlamp units 9 and 10 are assembled. According to the illustrated embodiment, when assembling the front bumper 2, a middle part of the front bumper 2 is horizontally introduced into a gap between the front garnish 8 and lower bracket 17 from front, and the engagement portion 2a of the front bumper 2 is engaged/retained by the lower wall portion 61b of the lower bracket 17.

When the front bumper 2 is introduced into the gap between the front garnish 8 and lower bracket 17, the friction between the front bumper 2 and lower bracket 17 causes a rearwardly directed load on the lower bracket 17 (or a load that acts upon the clamping portion 62 of the lower bracket 17 in the direction to pull the clamping portion 62 away from the rib 22a of the front garnish 8). However, in the illustrated embodiment, because the clamping force generating mechanism 68 provides a relatively large resilient clamping force to the clamping portion 62, the clamping portion 62 (or the lower bracket 17) would not be dislodged from the rib 22a when assembling the front bumper 2. The claming force generated by the clamping force generating mechanism 68 can be adjusted both easily and accurately by changing the length of the large diameter stem portion 65a of the stepped bolt 65 and thereby adjusting the biasing force (or the compression) of the coil spring 66.

An automobile may hit another vehicle or a fixed structure on a road when the automobile is traveling. At such a time, the front bumper 2 and front garnish 8 would receive impact loads of various directions and magnitudes depending on the nature of the object which the automobile hits and the part of the automobile that hits the object.

Figure 7 shows the state when the front garnish 8 has slightly receded with respect to the front upper cover 32 and the front bumper 2 has more significantly receded with respect to the front garnish 8 owing to a mild collision with another vehicle. In this case, because the upper bracket 16 is made of thin steel plate, the upper bracket 16 deforms readily upon impact (or undergoes a plastic deformation) and this prevents significant damages to the front garnish 8 and front upper cover 32.

When a rearward impact load exceeding a prescribed value (such a level as to overcomes the resilient clamping force of the clamping portion 62) is applied to the lower bracket 17 via the front bumper 2, the clamping portion 62 dislodges from the rib 22a of the front garnish 8 and this prevents damages to the front garnish 8 and lower bracket 17.

As the front garnish 8 moves rearward with respect to the headlamp unit 9 and front upper cover 32, the side bracket 14 breaks at the notches 51-54 in an upper part thereof and at the notches 58 and 59 in a lower part thereof, and this also prevents damages to the front garnish 8.

According to the illustrated embodiment, owing to the particular structure that is used, the front garnish 8 and lower bracket 17 are kept intact and can be used again simply by replacing the side brackets 14 and 15 and upper bracket 16 that would be damaged/deformed, and this reduces the cost for the required repair.

Also, in the illustrated embodiment, because the side brackets 14 and 15, upper bracket 16 and lower bracket 17 are all mounted on the side of the inner panel 22, the stress to the seal members 24 is minimized as opposed to the conventional arrangement, and intrusion of moisture and dust into the hollow interior of the front garnish 8 can be effectively prevented. Furthermore, freedom in the design of the side brackets 14 and 15, upper bracket 16 and lower bracket 17 can be enhanced as they are prepared as component parts that are separate from the outer lens 21 and inner panel 22, and the mounting rigidity of the front garnish 8 can be improved for the same reason. The assembling efficiency and amount of assembly work can be reduced because the front garnish 8 can be secured to the front bumper 2 simply by horizontally pushing a middle part of the front bumper 2 into a gap defined between the front garnish 8 and lower bracket 17 from the front side of the automobile during the assembly process.

Although the present invention has been described in terms of a particular embodiment, the present invention is by no means limited by the illustrated embodiment but may be widely applied to automobiles fitted with a solid front garnish or a garnish having a grill formed therein. The lower bracket was made by welding steel plate pieces together but may also be made of a plastic member or a one-piece stamp formed steel plate member. Alternatively, the lower bracket may be made of a multi-piece member so as to be able to accommodate manufacturing and assembling errors. The front bumper was provided with a horizontal rib in the illustrated embodiment, but may also be provided with a vertical or arcuate rib. The specific structure of the clamping force generating mechanism and the specific shape of the lower bracket can be modified without departing from the spirit of the present invention.

Provided is an automotive front body structure that can prevent damages to an exterior garnish member or the like at the time of a mild crash situation while normally securing the exterior garnish member to a front bumper with an appropriate securing force. A lower bracket 17 made of stamp formed steel plate is provided between a lower part of the exterior garnish member and an upper part of the front bumper, and comprises a bracket main body 61 having a substantially Z-shaped cross section and a clamping portion 62 also made of stamp formed steel plate and having a substantially U-shaped cross section. The clamping portion 62 comprises a first clamping piece 62 secured to an upper wall portion 61a of the bracket main body 61 and a second clamping piece 62b that clamps the rib 22a of the inner panel 22 in cooperation with the first clamping piece 62a. The clamping portion 62 of the lower bracket 17 is provided with a pair of clamping force generating mechanism 68 in a laterally spaced relationship, and each clamping force generating mechanism comprises a stepped bolt 65, a coil spring 66 and a nut 67. Thereby, a relatively large resilient claming force is produced for clamping the rib 22a of the front garnish 8 with the clamping portion 62.

## Claims

1. An automotive front body structure comprising a front bumper (2), an exterior garnish member (8) disposed above the front bumper (2) and a lower bracket (17) for securing an upper part of the front bumper (2) to a lower part of the exterior garnish member (8), wherein:
the exterior garnish member (8) is provided with a rib (22a); and
the lower bracket (17) is provided with a clamping portion (62) clamping the rib (22a) at a prescribed clamping force and a base portion (61) retained by an upper part of the front bumper (2), wherein the clamping portion (62) is provided with a first clamping piece (62a) and a second clamping piece (62b) interposing the rib (22a) therebetween, wherein the rib (22a) is provided with a notch (22b) and the first clamping piece (62a) is provided with a first through hole (63) at a position corresponding to the notch (22b) while the second clamping piece (62b) is provided with a second through hole (64) at a position opposing the first through hole (63);
the clamping portion (62) further comprising a threaded bolt (65) passed through the first through hole (63), notch (22b) and second through hole (64) and a nut (67) threaded onto the threaded bolt (65) to interpose the rib (22a) between the first (62a) and second (62b) clamping pieces,
**characterized in that** the rib (22a) extends rearward from a rear surface of a lower part of the exterior garnish member (8) and the notch (22b) provided on the rib (22a) has an open rear end wherein the threaded bolt (65) comprises a stepped bolt (65) including a large diameter stem portion (65a) passed through the first through hole (63) and notch (22b), a head (65b) formed at one end of the large diameter stem portion (65a) and a small diameter threaded portion (65c) formed on the other end of the large diameter stem portion (65a) and passed through the second through hole (64), which has a smaller diameter than the first through hole (63),
and a coil spring (66) as a resilient member (66) urging the two clamping pieces (62a, 62b) toward the rib (22a) is fitted on the stepped bolt (65) between the first clamping piece (62a) and head (65b) to resiliently urge the first clamping piece away from the head.

2. An automotive front body structure according to claim 1, wherein a rearwardly directed flange (2a) of an upper part of the front bumper (2) is simply placed on an upper surface of the base portion (61 b) of the lower bracket (61).

## Patentansprüche

1. Vordere-Fahrzeugkarosserie-Struktur, umfassend eine vordere Stoßstange (2), ein äußeres Verzierungselement (8), das oberhalb der vorderen Stoßstange (2) angeordnet ist, und eine untere Halterung (17), um einen oberen Teil der vorderen Stoßstange (2) an einem unteren Teil des äußeren Verzierungselements (8) zu sichern,
wobei das äußere Verzierungselement (8) mit einer Rippe (22a) versehen ist, und die untere Halterung (17) mit einem Klemmabschnitt (62) versehen ist, der die Rippe (22a) bei einer vorgeschriebenen Klemmkraft einklemmt, und mit einem Basisabschnitt (61), der von einem oberen Teil der vorderen Stoßstange (2) gehalten wird, wobei der Klemmabschnitt (62) mit einem ersten Klemmstück (62a) und einem zweiten Klemmstück (62b) versehen ist, zwischen denen die Rippe (22a) angeordnet ist, wobei die Rippe (22a) mit einer Aussparung (22b) versehen ist, und das erste Klemmstück (62a) mit einem ersten Durchgangsloch (63) versehen ist, an einer Position, die der Aussparung (22b) entspricht, während das zweite Klemmstück (62b) mit einem zweiten Durchgangsloch (64) versehen ist, an einer Position, die dem ersten Durchgangsloch (63) gegenüberliegt;
wobei der Klemmabschnitt (62) weiter einen Gewindebolzen (65) umfasst, der durch das erste Durchgangsloch (63), die Aussparung (22b) und das zweite Durchgangsloch (64) geführt ist, und eine Mutter (67), die auf den Gewindebolzen (65) geschraubt ist, um die Rippe (22a) zwischen dem ersten (62a) und dem zweiten (62b) Klemmstück anzuordnen,
**dadurch gekennzeichnet, dass** sich die Rippe (22a) von einer hinteren Fläche eines unteren Teils des äußeren Verzierungselements (8) nach hinten erstreckt, und die an der Rippe (22a) vorgesehene Aussparung (22b) ein offenes hinteres Ende aufweist, wobei der Gewindebolzen (65) einen gestuften Bolzen (65) umfasst, der einen Stielabschnitt mit großem Durchmesser (65a) aufweist, der durch das erste Durchgangsloch (63) und die Aussparung (22b) geführt ist, einen Kopf (65b), der an einem Ende des Stielabschnitts mit großem Durchmesser (65a) ausgebildet ist, und einen Gewindeabschnitt mit kleinem Durchmesser (65c), der an dem anderen Ende des Stielabschnitts mit großem Durchmesser (65a) ausgebildet ist und durch das zweite Durchgangsloch (64) geführt ist, welches einen kleineren Durchmesser aufweist, als das erste Durchgangsloch (63),
und wobei eine Schraubenfeder (66) als ein elastisches Element (66), das die zwei Klemmstücke (62a, 62b) zu der Rippe (22a) hin drängt, an den gestuften Bolzen (65) montiert ist, zwischen das erste Klemmstück (62a) und den Kopf (65b), um das erste Klemmstück elastisch von dem Kopf weg zu drängen.

2. Vordere-Fahrzeugkarosserie-Struktur nach Anspruch 1, wobei ein nach hinten gerichteter Flansch (2a) eines oberen Teils der vorderen Stoßstange (2) einfach auf eine obere Fläche des Basisabschnitts (61 b) der unteren Halterung (61) positioniert ist.

## Revendications

1. Structure avant de véhicule automobile comprenant un pare-chocs avant (2), un élément de garniture extérieure (8) disposé au-dessus du pare-chocs avant (2) et une fixation inférieure (17) destinée à maintenir une partie supérieure du pare-chocs avant (2) sur une partie inférieure de l'élément de garniture extérieure (8),
l'élément de garniture extérieure (8) étant muni d'une nervure (22a) ; et
la fixation inférieure (17) étant munie d'une partie de serrage (62) qui serre la nervure (22a) selon une force de serrage prescrite et d'une partie de base (61) retenue par une partie supérieure du pare-chocs avant (2), dans laquelle la partie de serrage (62) est munie d'une première pièce de serrage (62a) et d'une seconde pièce de serrage (62b) entre lesquelles est interposée la nervure (22a), dans laquelle la nervure (22a) est munie d'une fente (22b) et la première pièce de serrage (62a) est munie d'un premier trou traversant (63) à un emplacement correspondant à la fente (22b) tandis que la seconde pièce de serrage (62b) est munie d'un second trou traversant (64) à un emplacement opposé au premier trou traversant (63) ;
la partie de serrage (62) comprenant en outre un boulon fileté (65) qui passe par le premier trou traversant (63), la fente (22b) et le second trou traversant (64) et un écrou (67) vissé sur le boulon fileté (65) afin d'interposer la nervure (22a) entre la première (62a) et la seconde (62b) pièces de serrage,
**caractérisée en ce que** la nervure (22a) s'étend vers l'arrière depuis une surface arrière d'une partie inférieure de l'élément de garniture extérieure (8) et la fente (22b) prévue sur la nervure (22a) possède une extrémité arrière ouverte, dans laquelle le boulon fileté (65) comprend un boulon à épaulements (65) comprenant une partie de tige de grand diamètre (65a) qui passe par le premier trou traversant (63) et la fente (22b), une tête (65b) formée à une extrémité de la partie de tige de grand diamètre (65a) et une partie filetée de petit diamètre (65c) formée sur l'autre extrémité de la partie de tige de grand diamètre (65a) et qui passe par le second trou traversant (64), qui possède un diamètre inférieur au premier trou traversant (63),
et un ressort hélicoïdal (66) faisant office d'élément élastique (66) forçant les deux pièces de serrage (62a, 62b) vers la nervure (22a) est placé sur le boulon à épaulements (65) entre la première pièce de serrage (62a) et la tête (65b) afin d'éloigner de manière élastique la première pièce de serrage de la tête.

2. Structure avant de véhicule automobile selon la revendication 1, dans laquelle une collerette orientée vers l'arrière (2a) d'une partie supérieure du pare-chocs avant (2) est simplement placée sur une surface supérieure de la partie de base (61b) de la patte de fixation inférieure (61).
